# EUROPÄISCHE PATENTSCHRIFT

(11) **EP 0 711 958 B1**
(45) Veröffentlichungstag und Bekanntmachung des Hinweises auf die Patenterteilung: **23.06.1999**
(21) Anmeldenummer: 95890162.1
(22) Anmeldetag: 12.09.1995
(51) Int. Cl.: F24D 11/02, F24D 3/10, F16K 11/074

(54) **Anlage zur Versorgung von Verbrauchern von Wärmeenergie und Vorrichtung hierfür**
Installation and device for supplying heat
Installation et appareil pour l'alimentation de chaleur

(30) Priorität: 08.11.1994 AT 206794
(43) Veröffentlichungstag der Anmeldung: 15.05.1996
(73) Patentinhaber: ERI Energie-Ressourcen Institut Forschungs- und Entwicklungs-GmbH, 6382 Kirchdorf in Tirol (AT)
(72) Erfinder: Schwarz, Alois, A-6283 Kirchdorf/Tirol (AT)
(74) Vertreter: Atzwanger, Richard, Dipl.-Ing. Patentanwalt

(56) Entgegenhaltungen:
- EP-A- 0 455 184
- WO-A-79/00440
- DE-A- 2 610 471
- FR-A- 2 455 700
- FR-A- 2 493 487

## Beschreibung

Die gegenständliche Erfindung betrifft eine Anlage zur Versorgung von Verbrauchern von Wärmeenergie mit einem in mindestens einer Wärmequelle erwärmten Trägermedium, wobei die Anschlußleitungen der mindestens einen Wärmequelle an eine Vorrichtung geführt sind, an welche eine Mehrzahl von Verbrauchern angeschlossen ist.
Die gegenständliche Erfindung betrifft weiters Verteilereinrichtungen und Sammlereinrichtungen für eine derartige Anlage sowie eine Vorrichtung, welche derartige Verteilereinrichtungen und Sammlereinrichtungen enthält und welche zur Steuerung der Versorgung von Verbrauchern mit erwärmtem Trägermedium dient.

Es ist bekannt, zur Versorgung von Verbrauchern mit Wärmeenergie Umweltkollektoren, wie Sonnenkollektoren, Abwärmekollektoren, Erdspeicher u.dgl. heranzuziehen. Es ist weiters bekannt, zur Erzielung eines den Anforderungen der Verbraucher von Wärmeenergie entsprechenden Temperaturniveaus solche Wärmeenergie, welche eine niedrige Temperatur aufweist, mittels Wärmepumpen auf Wärmeenergie mit einer hohen Temperatur anzuheben.

Da jedoch bei der Versorgung von Verbrauchern mit Wärmeenergie viele Sachverhalte berücksichtigt werden müssen, wird durch die bisher bekannten Anlagen den technischen und organisatorischen Anforderungen nicht entsprochen, weswegen der allgemeinen Verwendung derartiger Anlagen enge Grenzen gesetzt sind:

So ist der Wirkungsgrad von Umweltkollektoren, insbesondere von Sonnenkollektoren, dann optimal, soferne diesen Kollektoren das Trägermedium mit einer möglichst tiefen Temperatur zugeführt wird, da nur hierdurch mittels der Umweltkollektoren eine große Temperaturdifferenz ausgenützt werden kann, wodurch ein großer Betrag an Wärmeenergie gewonnen werden kann. Dabei muß jedoch beachtet werden, daß bei der Mehrzahl der Umweltkollektoren das Angebot an Wärme sich über den zeitlichen Verlauf hinweg verändert. So hängt diejenige Wärmeenergie, welche in Umweltkollektoren gewonnen werden kann, von der jeweiligen Außentemperatur ab, welche im Sommer wesentlich höher ist als im Winter und während des Tages in der Regel höher als in der Nacht ist. Weiters hängt diejenige Wärmeenergie, welche mittels Sonnenkollektoren gewonnen werden kann, vom jeweiligen Sonnenstand gegenüber dem Sonnenkollektor ebenso wie von den Witterungsverhältnissen ab. Ähnliche Sachverhalte treffen für solche Wärmekollektoren zu, durch welche die Abwärme von Produktionsvorgängen oder von Bearbeitungsvorgängen gewonnen wird, da das Wärmeangebot vom zeitlichen Ablauf dieser Vorgänge abhängig ist. Demnach besteht die Schwierigkeit, daß die Zeiträume des Wärmeangebotes von Wärmekollektoren mit den Zeiträumen der Wärmenachfrage von Verbrauchern an Wärmeenergie nicht übereinstimmen, wodurch einerseits ein Überangebot an Wärmeenergie, welche durch Wärmekollektoren gewonnen wird, und andererseits ein Wärmeverbrauch, welcher durch die Wärmekollektoren nicht gedeckt wird, bedingt werden können.
Weiters muß berücksichtigt werden, daß von unterschiedlichen Wärmekollektoren, wie Sonnenkollektoren, Umweltkollektoren bzw. von Wärmespeichern, zu gleichen Zeitpunkten das Trägermedium mit unterschiedlichen Temperaturniveaus abgegeben wird, weswegen das von einzelnen Wärmequellen abgegebenen Trägermedium keinesfalls miteinander vermischt werden darf, da hierdurch dasjenige Trägermedium, welches das höchste Temperaturniveau aufweist, auf ein niedrigeres Temperaturniveau abgekühlt werden würde, wodurch ein Verlust an Wärmepotential bedingt wird. Demnach muß gewährleistet werden, daß das aus unterschiedlichen Wärmequellen zuströmenden Trägermedium mit unterschiedlichen Temperaturniveaus jeweils solchen Verbrauchern an Wärmeenergie zugeleitet wird, welche auf diese Temperaturniveaus abgestellt sind.
Insoweit als ein gegebenes Temperaturniveau mittels einer Wärmepumpe auf ein höheres Temperaturniveau angehoben wird, um hierdurch bestimmten Verbrauchern an Wärmeenergie die von diesen geforderte Wärmeenergie mit hohem Temperaturniveau zuführen zu können, muß weiters berücksichtigt werden, daß der Wirkungsgrad von Wärmepumpen dann optimal ist, wenn diesen das Trägermedium mit einem innerhalb enger Grenzen liegenden Temperaturwert zugeführt wird. Zudem besteht bei Wärmepumpen das Erfordernis, daß diese über lange Zeiträume von zumindest einer Stunde kontinuierlich eingeschaltet bleiben bzw. daß ein oftmaliges Ein- und Ausschalten der Wärmepumpen deshalb vermieden werden muß, da andernfalls deren Lebensdauer stark verkürzt werden würde. Dabei ist weiters zu berücksichtigen, daß die maximale Leistung von Wärmepumpen so ausgelegt sein muß, um auch bei niedrigem Angebot von aus Umweltkollektoren gewonnener Wärmeenergie den Bedarf an Wärmeenergie decken zu können.

Zudem muß in derartigen Anlagen berücksichtigt werden, daß in jeglichen Gebäuden, insbesondere in Hotels, Wohnhäusern, gewerblichen Betrieben und Fabrikationsanlagen, nicht nur Wärmeenergie, sondern auch Kälteenergie benötigt wird. Wärmeenergie wird während der kalten Jahreszeit, insbesondere im Winter, für Heizzwecke und während des gesamten Jahres zur Erwärmung von Gebrauchswasser für Reinigungszwecke, für Schwimmbäder, für die Klimatisierung von Räumen u.dgl. mehr benötigt. Kälteenergie wird während des gesamten Jahres für Kühlzwecke, z.B. in Kühlanlagen für die Lagerung von Nahrungsmitteln, benötigt. Da sich derartige Anlagen in der Regel in zentralen Bereichen von Gebäuden befinden, wurde festgestellt, daß das Erfordernis an Kühlenergie im Winter mindestens ebenso groß oder selbst größer als im Sommer ist. Der Grund hierfür liegt darin, daß im Winter derartige Gebäude geheizt werden, wobei diese Heizenergie auch in die Kühlräume gelangt.

Der gegenständlichen Erfindung liegt demnach die Aufgabe zugrunde, eine Anlage zur Versorgung von Verbrauchern an Wärmeenergie mit einem in mindestens einer Wärmequelle erwärmten Trägermedium zu schaffen, durch welche die Vielzahl der vorstehend angeführten Sachverhalte berücksichtigt ist, wodurch eine derartige Anlage den technischen und organisatorischen Erfordernissen entspricht. Dies wird erfindungsgemäß dadurch erzielt, daß die Ausgangsleitung der mindestens einen Wärmequelle an den Eingang mindestens einer dieser zugeordneten steuerbaren Verteilereinrichtung gelegt ist, welche mit einer Mehrzahl von Ausgängen ausgebildet ist, an welche die Vorlaufleitungen zu Verbrauchern an Wärmeenergie mit unterschiedlichem Temperaturniveau angeschlossen sind, wobei durch die steuerbare Verteilereinrichtung einer der Verbraucher auswählbar ist, welchem das erwärmte Trägermedium zuführbar ist und daß Verbraucher an Wärmeenergie mit unterschiedlichen Temperaturniveaus in Serie geschaltet sind, wodurch sie nacheinander vom Trägermedium durchströmt sind.

Durch diese Verteilereinrichtung wird somit gewährleistet, daß das von einer Wärmequelle abgegebene Trägermedium demjenigen Verbraucher oder derjenigen Gruppe von Verbrauchern an Wärmeenergie zugeführt wird, für welchen bzw. für welche eben dasjenige Temperaturniveau erforderlich ist, welches von der Wärmequelle abgegeben wird, wobei die Verbraucher an Wärmeenergie mit unterschiedlichen Temperaturniveaus in Serie geschaltet sind, wodurch sie nacheinander vom Trägermedium durchströmbar sind. Als Verbraucher von Wärmeenergie können dabei Heizkörper, Geschirrspülmaschinen, Waschmaschinen, Trocknungseinrichtungen, Warmwasserspeicher und Fußbodenheizungen vorgesehen sein, welche vom erwärmten Trägermedium in Serie durchströmt werden, wobei dieses seine Wärmeenergie an diese Verbraucher abgibt, wodurch es abgekühlt wird.

Als Wärmequellen können Umweltkollektoren, insbesondere Sonnenkollektoren, Abwärmekollektoren, Wärmespeicher, insbesondere Erdspeicher, u.dgl. vorgesehen sein. Soferne als Wärmequelle zwei nach unterschiedlichen Himmelsrichtungen orientierte Sonnenkollektoren vorgesehen sind, wird von diesen das Trägermedium mit unterschiedlichen Temperaturniveaus abgegeben. Da dabei jeder dieser Wärmequellen eine eigene Verteilereinrichtung zugeordnet ist, wird das Trägermedium mittels der jeweiligen Verteilereinrichtung demjenigen Verbraucher bzw. derjenigen Gruppe an Verbrauchern zugeleitet, welcher bzw. welche auf dasjenige Temperaturniveau abgestellt ist, welches das vom zugeordneten Kollektor abgegebene Trägermedium aufweist. Hierdurch wird dem Trägermedium dessen Wärmeenergie entzogen.

Zudem können weitere Verbraucher für Wärmeenergie mit niedrigem Temperaturniveau, wie in Innenwänden, in Fußböden, in Außenwänden u.dgl. verlegte Rohrleitungen vorgesehen sein, in welche das Trägermedium mit niedrigem Temperaturniveau eingeleitet wird, wodurch einerseits die in diesem enthaltene Wärmeenergie gespeichert wird und andererseits eine Isolierung bewirkt wird, wodurch eine Klimatisierung von Räumen erzielbar ist. Zudem kann weiters mindestens ein Energiespeicher, z.B. ein Erdspeicher, vorgesehen sein.

Vorzugsweise enthält die Anlage eine weitere Wärmequelle in Form einer Wärmepumpe. Zur Speisung der Wärmepumpe ist mindestens eine Sammlereinrichtung vorgesehen, an deren Eingänge die Rücklaufleitungen der Verbraucher bzw. der Verbrauchergruppen mit unterschiedlichem Temperaturniveau gelegt sind, und deren einziger Ausgang an den Eingang der Wärmepumpe gelegt ist. Hierdurch kann berücksichtigt werden, daß eine Wärmepumpe dann mit einem optimalen Wirkungsgrad arbeitet, soferne ihr ein Trägermedium mit einem eng begrenzten Temperaturwert zugeleitet wird. Durch die Sammlereinrichtung ist dabei diejenige Rücklaufleitung von einem bzw. einer aus der Mehrzahl von Verbrauchern oder Verbrauchergruppen an Wärmeenergie auswählbar, welche das Trägermedium mit dem für die Wärmepumpe erforderlichen Temperaturniveau aufweist, welches der Wärmepumpe zugeleitet wird. In der Wärmepumpe wird das Temperaturniveau des Trägermediums auf denjenigen Wert angehoben, welcher für die Versorgung der Verbraucher an Wärmeenergie benötigt wird. Die Zuleitung des Trägermediums erfolgt über eine der Wärmepumpe zugeordnete Verteilereinrichtung, durch welche derjenige Verbraucher auswählbar ist, welcher von der Wärmepumpe mit Wärmeenergie versorgt werden soll.

Im Energiespeicher erfolgt die Speicherung von überschüssiger Wärmeenergie, welche dann, soferne von den Umweltkollektoren zu wenig Wärmeenergie abgegeben wird, abgezogen werden kann.

Eine erfindungsgemäße Anlage, erfindungsgemäße Verteilereinrichtungen und Sammlereinrichtungen und eine erfindungsgemäße Vorrichtung sind nachstehend anhand von in der Zeichnung dargestellten Ausführungsbeispielen näher erläutert. Es zeigen:
- Fig. 1: eine erfindungsgemäße Anlage, in schematischer Darstellung,
- Fig. 2: eine erfindungsgemäße Einrichtung, in axonometrischer Darstellung, und
- Fig. 3: eine erfindungsgemäße Einrichtung, in axonometrischer Darstellung, wobei einige Bestandteile weggelassen sind.

Eine erfindungsgemäße Anlage, erfindungsgemäße Verteilereinrichtungen und Sammlereinrichtungen und eine erfindungsgemäße Vorrichtung sind nachstehend anhand von in der Zeichnung dargestellten Ausführungsbeispielen näher erläutert. Es zeigen:

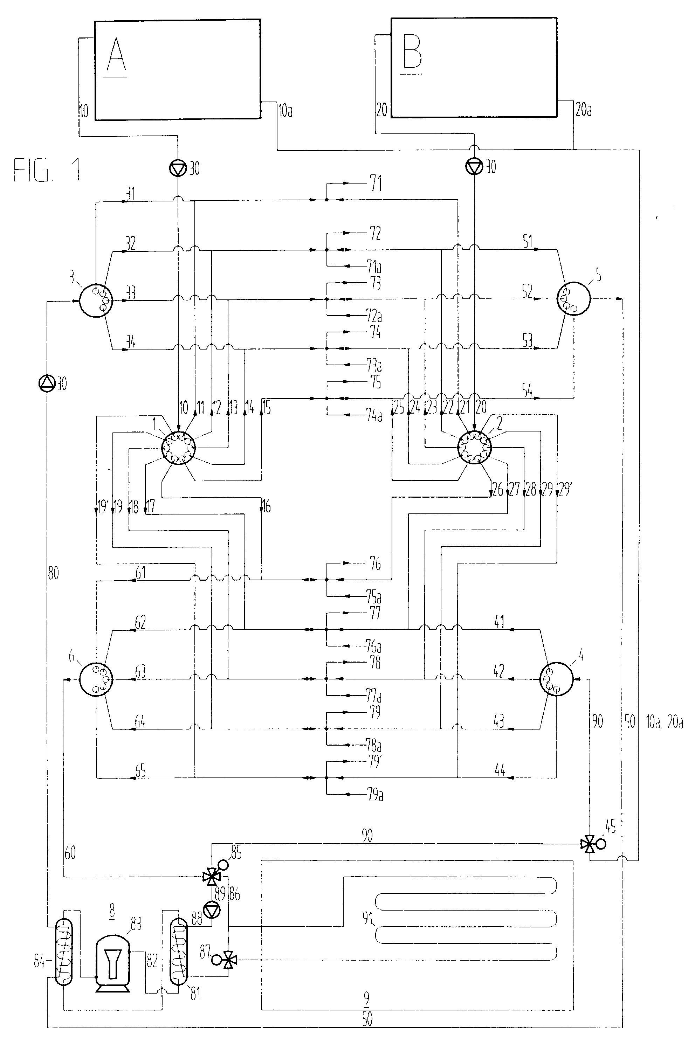

- Fig. 1: eine erfindungsgemäße Anlage, in schematischer Darstellung,

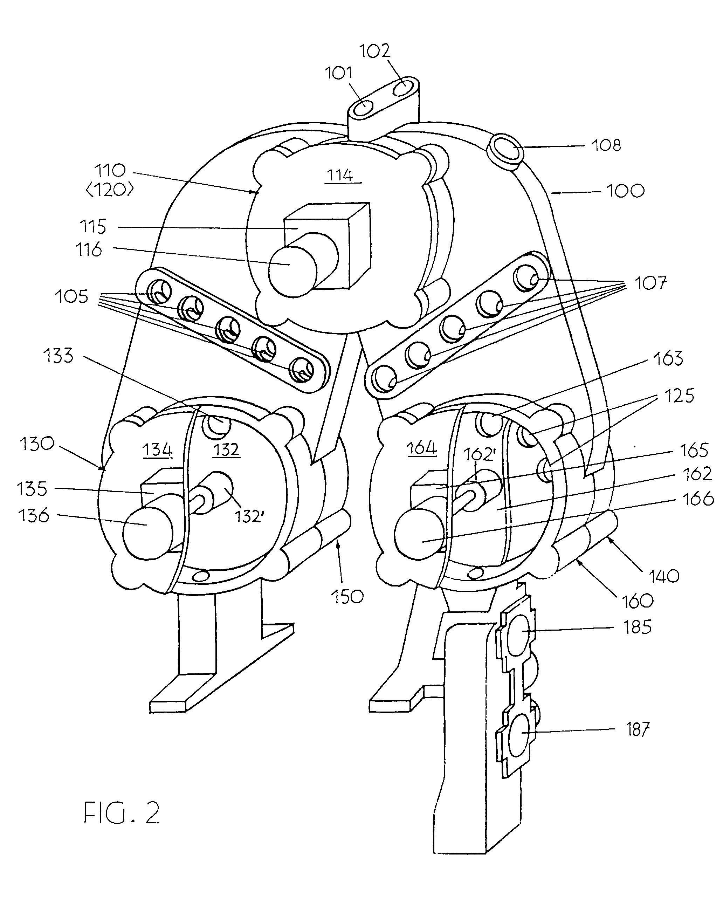

- Fig. 2: eine erfindungsgemäße Vorrichtung, in axonometrischer Darstellung, und

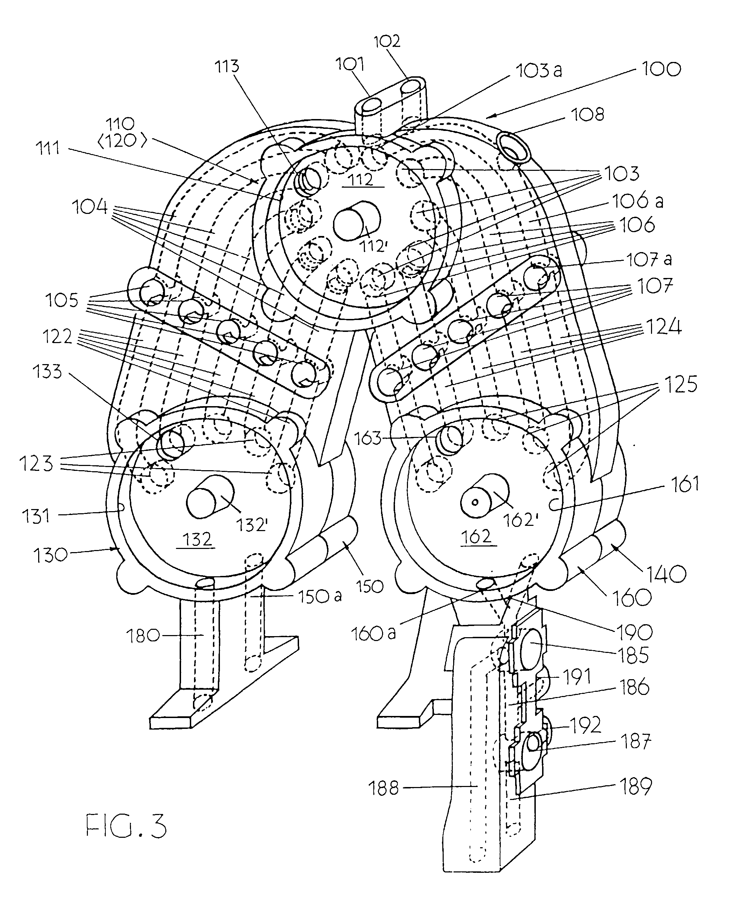

- Fig. 3: eine erfindungsgemäße Vorrichtung, in axonometrischer Darstellung, wobei einige Bestandteile weggelassen sind.

Eine erfindungsgemäße Anlage enthält zwei Verteilereinrichtungen 1 und 2, an deren jeweilige einzigen Eingänge die Ausgangsleitungen 10 und 20 von zwei Wärmequellen gelegt sind. Die Wärmequellen sind z.B. durch Umweltkollektoren, insbesondere Sonnenkollektoren A und B, Abwärmekollektoren, Erdspeicher od.dgl. gebildet. Die an die Ausgänge der Verteilereinrichtungen 1 und 2 angeschlossenen Leitungen 11 bis 19' und 21 bis 29' sind an Vorlaufleitungen 71 bis 79' für Verbraucher an Wärmeenergie mit unterschiedlichen Temperaturniveaus gelegt. Die Rücklaufleitungen 71a bis 79a von den Verbrauchern sind jeweils an die Vorlauf leitungen des nächstfolgenden Verbrauchers an Wärmeenergie angeschlossen. So ist die Rücklaufleitung 71a an die Vorlaufleitung 72 für einen zweiten Verbraucher an Wärmeenergie angeschlossen.

Die Vorlaufleitungen 71 bis 75 führen zu einer ersten Gruppe von fünf Verbrauchern an Wärmeenergie mit hohem Temperaturniveau von etwa 80°C bis etwa 30°C, wie erstens Heizkörpern, zweitens Maschinen, z.B. Geschirrspüler, Waschmaschinen, Trocknungsgeräte u.dgl., drittens und viertens Heißwasserspeichern und fünftens einer Fußbodenheizung. Die Vorlauf leitungen 76 bis 79 führen zu einer zweiten Gruppe von Verbrauchern an Wärmeenergie mit niedrigem Temperaturniveau von etwa 25°C bis 20°C, wie Leitungen in Innenwänden, in Innenböden, in Außenwänden und in zwei unterschiedlichen Erdspeichern.

Zudem sind eine dritte Verteilereinrichtung 3 und eine vierte verteilereinrichtung 4 vorgesehen. An den einzigen Eingang der dritten verteilereinrichtung 3 ist die Rücklaufleitung 80 einer Wärmepumpe 8 angeschlossen. Die Ausgangsleitungen 31 bis 34 der dritten Verteilereinrichtung 3 führen zu den Vorlaufleitungen 71 bis 74 der Verbraucher von Wärmeenergie mit hohem Temperaturniveau. An den einzigen Eingang der vierten Verteilereinrichtung 4 ist eine von einer Kühlanlage 9 kommende Leitung 90 angeschlossen. Die Ausgangsleitungen 41 bis 44 der vierten Verteilereinrichtung sind an die Vorlaufleitungen 77 bis 79' der Verbraucher an Wärmeenergie mit niedrigem Energieniveau angeschlossen.

Weiters sind zwei Sammlereinrichtungen 5 und 6 vorgesehen. Die Eingangsleitungen 51 bis 54 der ersten Sammlereinrichtung 5 sind an die zu den Vorlaufleitungen 72 bis 75 für Verbraucher an Wärme mit hohem Temperaturniveau führenden Ausgangsleitungen 12 bis 16 und 22 bis 26 der beiden Verteilereinrichtungen 1 und 2 angeschlossen. Die einzige Ausgangsleitung 50 der ersten Sammlereinrichtung 5 führt zur Wärmepumpe 8. Die Eingangsleitungen 61 bis 65 der zweiten Sammlereinrichtung 6 sind an die zu den Vorlaufleitungen 76 bis 79' zu Verbrauchern mit niedrigem Temperaturniveau führenden Leitungen 16 bis 19' der ersten Verteilereinrichtung 1 bzw. die Leitungen 26 bis 29' der zweiten Verteilereinrichtung 2 angeschlossen. Die einzige Ausgangsleitung 60 führt zur Wärmepumpe 8.

Die Wärmepumpe 8 enthält einen Verdampfer 81, dessen Ausgang über eine Leitung 82 an einen Kompressor 83 gelegt ist, sowie einen Kondensator 84. Die von der Sammlereinrichtung 6 zur Wärmepumpe 8 führende Leitung 60 enthält eine Mischeinrichtung 85, welche mittels einer Leitung 86 mit einem Dreiwegeventil 87 verbunden ist. In einer vom Mischventil 85 zum Verdampfer 81 führenden Leitung 88 befindet sich weiters eine Pumpe 89. Die Kühlanlage 9 enthält eine Kühlschlange 91, welche an die Mischeinrichtung 85 und an das Dreiwegeventil 87 angeschlossen ist.

In der vom Dreiwegeventil 85 zur Verteilereinrichtung 4 führenden Leitung 90 befindet sich ein Mischventil 45, an das zu den Sonnenkollektoren A und B zurück führende Leitungen 10a und 20a angeschlossen sind.

Anstelle des zweiten Sonnenkollektors B kann auch ein Umweltkollektor oder ein Erdspeicher vorgesehen sein. In einer Mehrzahl der Leitungen sind Pumpen 30 angeordnet.

Die Wirkungsweise dieser Anlage ist wie folgt:
Über die Ausgangsleitung 10 des ersten Sonnenkollektors A wird erwärmtes Trägermedium der ersten Verteilereinrichtung 1 zugeführt. In Abhängigkeit davon, welche Temperatur dieses Trägermedium aufweist, wird dasselbe über eine der Ausgangsleitungen 11 bis 19' demjenigen Verbraucher an Wärmeenergie zugeführt, welcher auf die zur Verfügung stehende Temperatur abgestellt ist. Soferne z.B. vom Sonnenkollektor A Trägermedium mit einer Temperatur von etwa 80°C abgegeben wird, wird dieses über die Verteilereinrichtung 1 durch die Leitung 11 hindurch der Vorlaufleitung 71 für den Verbraucher mit dem höchsten Temperaturniveau, z.B. einer Gruppe von Heizkörpern, zugeführt. Soferne demgegenüber vom ersten Sonnenkollektor A Trägermedium mit einer Temperatur von 30°C abgegeben wird, wird dieses über die erste Verteilereinrichtung 1 durch die Leitung 15 hindurch der Vorlaufleitung 75 zur Fußbodenheizung zugeführt. Bei einer noch niedrigeren Temperatur wird das Trägermedium mittels der ersten Verteilereinrichtung 1 über eine der Leitungen 16 bis 19' einer der Vorlauf leitungen 76 bis 79' zu einem der Verbraucher mit niedrigem Temperaturniveau zugeführt.

In analoger Weise wird das vom zweiten Sonnenkollektor B über die Ausgangsleitung 20 der zweiten Verteilereinrichtung 2 zugeführte erwärmte Trägermedium in Abhängigkeit von dessen Temperatur über eine der Leitungen 21 bis 25 einer der Vorlaufleitungen 71 bis 75 zu einem der Verbraucher an Wärme mit hohem Temperaturniveau und über eine der Leitungen 26 bis 29' einer der Vorlauf leitungen 76 bis 79' einem der Verbraucher an Wärme mit niedrigem Temperaturniveau zugeführt.

Durch die Verteilereinrichtungen 1 und 2 wird somit gewährleistet, daß das Trägermedium jeweils zu denjenigen Verbrauchern gelangt, welche auf die Temperatur des jeweiligen Trägermediums abgestellt sind. Da die Rücklaufleitungen 71a bis 79a der Verbraucher an Wärmeenergie an die Vorlaufleitungen des jeweils nächstfolgenden Verbrauchers angeschlossen sind, kann das Trägermedium in Abhängigkeit von den wärmetechnischen Erfordernissen durch die weiteren Verbraucher hindurchgeleitet werden, wodurch die in diesem enthaltene Wärmeenergie an diese weiteren Verbraucher abgegeben wird.

Soferne jedoch das Erfordernis besteht, in die Anlage zusätzliche Wärmeenergie einzuspeisen, wird über eine der Leitungen 51 bis 54 von den beiden Kollektoren A und B bzw. von den Verbrauchern mit hohem Temperaturniveau zuströmendes Trägermedium über die erste Sammlereinrichtung 5 und über die zur Wärmepumpe 8 führende Leitung 50 dem Kondensator 84 der Wärmepumpe 8 zugeleitet. Im Kondensator 84 wird die Temperatur des Trägermediums auf denjenigen Temperaturwert angehoben, welcher in einem der Verbraucher für Wärme mit hohem Temperaturniveau erforderlich ist. Mittels der dritten Verteilereinrichtung 3 wird über eine der Leitungen 31 bis 34 an eine der Vorlaufleitungen 71 bis 74 für Verbraucher mit hohem Temperaturniveau von der Wärmepumpe 8 abgegebenen Trägermedium mit einer Temperatur von 80°C bis 30°C abgegeben. Da der Wärmepumpe 8 über die erste Sammlereinrichtung 5 Trägermedium mit einem hohen Temperaturniveau zugeleitet wird, kann dessen Temperatur durch die Wärmepumpe 8 auf die erforderlichen hohen Temperaturwerte angehoben werden.

Durch die zweite Sammlereinrichtung 6 wird dem Verdampfer der Wärmepumpe 8 über die Verteilereinrichtungen 1 und 2 von den Sonnenkollektoren A und B bzw. von einem der Verbraucher an Wärme mit niedrigem Temperaturniveau zuströmendes Trägermedium zugeführt. Durch die mittels der zweiten Sammlereinrichtung 6 ermöglichte Auswahl, aus welchem der Kollektoren bzw. aus welchen den Verbrauchern zuströmendes Trägermedium der Wärmepumpe 8 zugeführt wird, kann dem Umstand Rechnung getragen werden, daß der Wirkungsgrad der Wärmepumpe 8 dann optimiert wird, wenn der Wärmepumpe 8 das Trägermedium mit einem relativ genau festgelegten Temperaturwert von z.B. 30°C zugeleitet wird.

Das vom Verdampfer 81 der Wärmepumpe 8 abgegebene, abgekühlte Trägermedium wird über das Dreiwegeventil 87 der Kühlschlange 91 der Kühlanlage 9 zugeführt. Der Rücklauf der Kühlanlage 9 kann über das Dreiwegeventil 87 dem Vorlauf zugemischt werden. Zudem kann der Rücklauf der Kühlanlage 9 über das Mischventil 85 dem Vorlauf für den Verdampfer 81 zugefügt werden. Hierdurch kann die Temperatur des der Kühlanlage 9 zugeführten Trägermediums gesteuert werden. Zudem ist der Rücklauf der Kühlanlage 9 über das Mischventil 85 und die Leitung 90 an den Eingang der vierten Verteilereinrichtung 4 gelegt, von welcher es über eine der Leitungen 41 bis 44 zu den zu einem der Verbraucher an Wärme mit niedrigem Temperaturniveau führenden Vorlaufleitungen 77 bis 79' gelangt. Da die Rücklaufleitungen 75a bis 79a über die Sammlereinrichtung 6 und über deren Ausgangsleitung 60 an das Mischventil 85 gelegt sind, kann aus einem der Verbraucher an Wärme mit niedrigem Temperaturniveau in die Kühlanlage Trägermedium mit einer niedrigen Temperatur eingespeist werden.

In den einzelnen Leitungen sind Temperaturfühler angeordnet, durch welche die Temperaturen des in diesen Leitungen befindlichen Trägermediums gemessen werden. Die Ausgänge der Temperaturfühler sind an eine zentrale Steuereinheit gelegt. In die zentrale Steuereinheit werden weiters alle für den Betrieb der Anlage erforderlichen Daten, wie die Außentemperaturen, der Wärmebedarf der einzelnen Verbraucher u.dgl. eingespeist. Mittels eines Steuerungsprogrammes werden die Verteilereinrichtungen und die Sammlereinrichtungen dahingehend gesteuert, daß in Abhängigkeit vom Angebot an Wärmeenergie und vom Erfordernis an Wärmeenergie eine optimale Ausnützung der Anlage gewährleistet ist. Da an die Sonnenkollektoren A und B jeweils Trägermedium mit sehr tiefen Temperaturen zurückgeleitet wird, wird deren Wirkungsgrad optimiert. Von den Sonnenkollektoren A und B wird das erwärmte Trägermedium jeweils denjenigen Verbrauchern zugeführt, welche mit einer entsprechenden Temperatur beaufschlagt werden sollen. Durch die Hintereinanderschaltung der Verbraucher an Wärmeenergie mit unterschiedlichen Temperaturniveaus wird die im Trägermedium enthaltene Wärmeenergie vollständig ausgenützt. Überschüssige Wärmeenergie wird in einem der Wärmespeicher gespeichert und kann bei unzureichender Anlieferung von Wärmeenergie durch die Umweltkollektoren aus diesen Speichern entnommen werden.
Soferne der Bedarf an Wärmeenergie durch die Umweltkollektoren und die Wärmespeicher nicht gedeckt werden kann, wird zusätzlich die Wärmepumpe 8 in Betrieb genommen. Mittels der Sammlereinrichtung 5 wird der Wärmepumpe 8 Trägermedium mit hohem Temperaturwert zugeführt, wodurch durch die Wärmepumpe 8 das Trägermedium auf die erforderliche hohe Temperatur angehoben wird. Durch die Sammlereinrichtung 6 wird der Wärmepumpe 8 Trägermedium mit denjenigen Temperaturwerten zugeführt, daß deren optimaler Wirkungsgrad gewährleistet ist.
Weiters wird die in der Kühlanlage anfallende Wärmeenergie gleichfalls gewonnen und in die Anlage zurückgeleitet. Soferne von den Kollektoren A bzw. B Kälteenergie abgegeben wird, kann diese über die Verteilereinrichtungen 1 bzw. 2 und die Sammlereinrichtung 6 sowie über das Mischventil 85 der Kühlanlage 9 zugeleitet werden.

Hierdurch werden durch diese Anlage die dem bekannten Stand der Technik anhaftenden Nachteile, welche darin bestehen, daß kein optimaler Betrieb ermöglicht ist, vermieden.

Nachstehend ist weiters anhand der Fig. 2 und 3 eine Vorrichtung beschrieben, welche die Verteilereinrichtungen, die Sammlereinrichtungen und die zwischen diesen erforderlichen Leitungen enthält. Sobald an eine solche Vorrichtung die Anschlußleitungen für die Wärmequellen, insbesondere die Sonnenkollektoren, die zu den Verbrauchern an Wärmeenergie mit unterschiedlichen Temperaturniveaus, die zur Wärmepumpe, zu den Erdspeichern und zur Kühlanlage führenden Leitungen angeschlossen sind und weiters die Stellmotoren für die Verteilereinrichtungen und die Sammlereinrichtungen an die zentrale Steuereinheit angeschlossen sind, ist die gesamte Anlage funktionsfähig.

Diese Vorrichtung besteht aus einem Gehäuse 100, welches an seiner Oberseite mit zwei Bohrungen 101 und 102 ausgebildet ist, welche zum Anschluß der von den Wärmekollektoren, insbesondere den Sonnenkollektoren A und B, kommenden Leitungen 10 und 20 dienen. Diese Bohrungen 101 und 102 führen über im Gehäuse 100 befindliche Kanäle zu zehn Querbohrungen 103, welche ihrerseits in zwei Verteilereinrichtungen 110 und 120, welche an der Vorderseite und an der Rückseite des Gehäuses 100 vorgesehen sind und welche sich zur Mittelebene des Gehäuses 100 in einer symmetrischen Lage befinden, münden. In der Zeichnung ist nur die vordere Verteilereinrichtung 110 ersichtlich, welche nachstehend beschrieben ist. Die Verteilereinrichtung 120, welche sich auf der Rückseite des Gehäuses 100 befindet, weist den identischen Aufbau auf.

Die Verteilereinrichtung 110 weist eine Verteilerkammer 111 auf, in welche die Querbohrungen 103 münden. An die hintere Stirnfläche der Verteilerkammer 111, in welcher die Querbohrungen 103 enden, liegt eine verdrehbar gelagerte Scheibe 112 an, welche mit einer einzigen Bohrung 113 ausgebildet ist. Die Verteilerkammer 111 ist mittels eines Deckels 114 abgeschlossen. Am Deckel 114 befinden sich ein Getriebe 115 und ein Stellmotor 116. Durch den Stellmotor 116 ist die Scheibe 112 so verdrehbar, daß sich deren Bohrung 113 über einer der Querbohrungen 103 befindet.

Von den zehn Querbohrungen 103 gehen im Inneren des Gehäuses 100 fünf Kanäle 104 aus, welche zu fünf Querbohrungen 105 führen und gehen weitere fünf Kanäle 106 aus, welche zu fünf Querbohrungen 107 führen.

An der Vorderseite des Gehäuses 100 sind an die Querbohrungen 105 die Vorlauf leitungen 71 bis 75, welche zu den Verbrauchern an Wärme mit hohem Temperaturniveau führen, anschließbar. An die Querbohrungen 107 sind die Vorlaufleitungen 76 bis 79', welche zu den Verbrauchern an Wärme mit niedrigem Temperaturniveau führen, anschließbar. Demgegenüber sind an der Rückseite des Gehäuses 100 an die Querbohrungen 105 und 107 die von den Verbrauchern kommenden Leitungen 71a bis 79a anschließbar. Dabei geht eine zu einem der Verbraucher führende Leitung jeweils von einer der Querbohrungen 105 bzw. 107 aus und ist sie zur jeweils benachbarten Querbohrung 105 bis 107 zurückgeführt. Der letzte Kanal 106a, welcher die Querbohrungen 103a und 107a verbindet, ist weiters mit einem Stutzen 108 ausgebildet, an welche die zu den Wärmekollektoren A und B zurück führenden Leitungen 10a und 20a anschließbar sind.

Von den Querbohrungen 105 führen im Inneren des Gehäuses 100 Kanäle 122 zu fünf Querbohrungen 123, welche in einer Verteilereinrichtung 130, welche sich an der Vorderseite des Gehäuses 100 befindet, und einer Sammlereinrichtung 150, welche sich an der Rückseite des Gehäuses 100 befindet, münden. Die Verteilereinrichtung 130 ist wiederum mit einer Verteilerkammer 131 ausgebildet, in welcher sich eine mit einer einzigen Bohrung 133 ausgebildete Drehscheibe 132 befindet, welche mittels eines Stellmotors 136 und eines zwischengeschalteten Getriebes 135 verdrehbar ist. Die Sammlereinrichtung 150 weist den gleichen Aufbau auf. Zur Verteilerkammer 131 führt ein Kanal 180, an welchen die vom Kondensator 84 der Wärmepumpe 8 abgehende Leitung 80 anschließbar ist.
Von der Sammlerkammer der Sammlereinrichtung 150 geht ein Kanal 150a ab, an welchen die zum Kondensator 84 der Wärmepumpe 8 führende Leitung 50 anschließbar ist.

Von den Querbohrungen 107 gehen fünf Kanäle 124 ab, welche in fünf Querbohrungen 125 münden, welche sich zwischen einer zweiten Sammlereinrichtung 160 und einer dritten Verteilereinrichtung 140 erstrecken. Auch die Sammlereinrichtung 160 weist eine Sammlerkammer 161, eine Drehscheibe 162 mit einer Bohrung 163, eine Deckplatte 164, ein Getriebe 165 und einen Stellmotor 166 auf. Die Verteilereinrichtung 140 ist analog ausgebildet. An die Sammlereinrichtung 160 ist ein Kanal 160a angeschlossen, welcher zu einem Mischventil 185 führt. Vom Mischventil 185 geht weiters ein Kanal 188 aus, an welchen die zur Wärmepumpe 8 führende Leitung 88 anschließbar ist. Vom Mischventil 185 geht weiters ein Kanal 186 zu einem Dreiwegventil 187, von welchem ein Kanal 189 abgeht, an welchen die zum Verdampfer 81 der Wärmepumpe 8 führende Leitung anschließbar ist. Von der Verteilerkammer der Verteilereinrichtung 140 geht weiters ein Kanal 190 ab, der gleichfalls zur Mischeinrichtung 185 führt. Von der Mischeinrichtung 185 geht ein Kanal 191 ab und vom Dreiwegeventil 187 geht ein Kanal 192 ab, an welche Kanäle die Kühlanlage 9 anschließbar ist.

Das in den Fig. 2 und 3 dargestellte Gehäuse 100 enthält demnach alle im Schema gemäß Fig. 1 dargestellten Einrichtungen und Verbindungen, wodurch nach Anschluß der Verbindungsleitungen sowie der erforderlichen Pumpen und durch Anschluß der Stellmotoren der Verteilereinrichtungen 110, 120, 130 und 140 sowie der Sammlereinrichtungen 150 und 160 an die zentrale Steuereinheit mittels des Gehäuses 100 die anhand der Fig. 1 erläuterte Wirkungsweise durchführbar ist. Dies wird dadurch erzielt,daß die Drehscheiben der Verteilereinrichtungen bzw. der Sammlereinrichtungen so verstellt werden, daß das Trägermedium durch jeweils eine Querbohrung so zufließen bzw. abströmen kann, daß die jeweils angestrebte optimale Wirkungsweise der Anlage erzielbar ist.

Um die Scheiben 112, 132 bzw. 162 mittels der Stellmotoren 116, 136 bzw. 166 ohne Schwierigkeiten verdrehen zu können, wird die Verteilereinrichtung durch Schließen von im System vorgesehenen Sperrventilen oder durch Abschalten der Förderpumpe drucklos gemacht, wodurch die Scheiben 112, 132 bzw. 162 durch die diesen zugeordneten Stellmotoren in eine neue Stellung verdreht werden können. Sobald diese neue Stellung erreicht ist, werden die Scheiben 112, 132 bzw. 162 mittels an diesen angeordneten Stellzylindern 112', 132' bzw. 162' wieder an die Rückwand der Kammern 111, 131 bzw. 161 angepreßt, wodurch die erforderliche Abdichtung gegenüber dem ausgewählten Eingangskanal 103, 123 bzw. 125 erzielt wird.

## Patentansprüche

1. Anlage zur Versorgung von Verbrauchern von Wärmeenergie mit einem in mindestens einer Wärmequelle erwärmten Trägermedium, wobei die Anschlußleitungen der mindestens einen Wärmequelle (A, B, 8) an eine Vorrichtung geführt sind, an welche eine Mehrzahl von Verbrauchern angeschlossen ist, dadurch gekennzeichnet, daß die Ausgangsleitung der mindestens einen Wärmequelle (A, B, 8) an den Eingang mindestens einer dieser zugeordneten steuerbaren Verteilereinrichtung (1, 2) gelegt ist, welche mit einer Mehrzahl von Ausgängen ausgebildet ist, an welche die Vorlaufleitungen (71 bis 79') zu Verbrauchern an Wärmeenergie mit unterschiedlichem Temperaturniveau angeschlossen sind, wobei durch die steuerbare Verteilereinrichtung (1, 2) einer der Verbraucher auswählbar ist, welchem das envärmte Trägermedium zuführbar ist und daß Verbraucher an Wärmeenergie mit unterschiedlichen Temperaturniveaus in Serie geschaltet sind, wodurch sie nacheinander vom Trägermedium durchströmt sind (Fig. 1).

2. Anlage nach Patentanspruch 1, dadurch gekennzeichnet, daß mindestens eine Wärmequelle in an sich bekannter Weise durch einen Sonnenkollektor (A, B), durch einen Umweltkollektor und bzw. oder einen Erdspeicher od.dgl. gebildet ist, wobei vorzugsweise zwei nach unterschiedlichen Himmelsrichtungen ausgerichtete Sonnenkollektoren (A, B) vorgesehen sind.

3. Anlage nach einem der Patentansprüche 1 und 2, dadurch gekennzeichnet, daß mindestens eine Wärmequelle durch eine Wärmepumpe (8) gebildet ist.

4. Anlage nach Patentanspruch 3, dadurch gekennzeichnet, daß die Rücklaufleitungen (75a bis 79a) von Verbrauchern mit niedrigem Temperaturniveau an die Eingänge (61 bis 65) einer steuerbaren Sammlereinrichtung (6) gelegt sind, welche mit einer einzigen Ausgangsleitung (60) ausgebildet ist, welche an den Eingang einer Wärmepumpe (8) gelegt ist, wobei durch die Sammlereinrichtung (6) derjenige Verbraucher auswählbar ist, dessen Rücklauf an die Wärmepumpe (8) gelegt wird, wobei vorzugsweise die Rücklaufleitungen (75a bis 79a) der Verbraucher an Wärmeenergie mit niedrigem Temperaturniveau über die steuerbare Sammlereinrichtung (6) an den Verdampfer (81) der Wärmepumpe (8) anschließbar sind.

5. Anlage nach Patentanspruch 4, dadurch gekennzeichnet, daß die Rücklaufleitungen (71 bis 75) der Verbraucher an Wärmeenergie mit hohem Temperaturniveau über eine weitere steuerbare Sammlereinrichtung (5) an den Kondensator (84) der Wärmepumpe (8) anschließbar sind.

6. Anlage nach einem der Patentansprüche 3 bis 5, dadurch gekennzeichnet, daß der Ausgang der Wärmepumpe (8) an den Eingang einer weiteren steuerbaren Verteilereinrichtung (3) gelegt ist, welche mit einer Mehrzahl von Ausgängen (31 bis 34), welche zu Verbrauchern mit hohem Temperaturniveau führen, ausgebildet ist, wobei durch diese weitere Verteilereinrichtung (3) einer der Verbraucher auswählbar ist, welchem das Trägermedium von der Wärmepumpe (8) zugeführt wird.

7. Anlage nach einem der Patentansprüche 3 bis 6 mit einer Wärmepumpe (8), welche mit einem Verdampfer (81), mit einem Kompressor (83) und mit einem Kondensator (84) ausgebildet ist, dadurch gekennzeichnet, daß an den Verdampfer (81) ein Verbraucher (9) für Kälteenergie angeschlossen ist.

8. Anlage nach Patentanspruch 7, dadurch gekennzeichnet, daß die Rücklaufleitung (90) des Verbrauchers (9) an Kälteenergie an den Eingang eines weiteren steuerbaren Verteilereinrichtung (4) gelegt ist, an deren Ausgänge (41 bis 44) Verbraucher mit einem niedrigen Temperaturniveau angeschlossen sind, wobei durch diese weitere Verteilereinrichtung (4) einer der Verbraucher auswählbar ist, welchem das im Verbraucher (9) an Kälteenergie (9) erwärmte Trägermedium zugeführt wird.

9. Anlage nach Patentanspruch 8, dadurch gekennzeichnet, daß die Rücklaufleitung für den Verbraucher (9) an Kälteenergie an ein Mischventil (85) angeschlossen ist, an welches zu den Wärmekollektoren (A, B) und zum Verdampfer (81) der Wärmepumpe (8) führende Leitungen angeschlossen sind.

10. Verteilereinrichtung für eine Anlage nach einem der Patentansprüche 1 bis 9, dadurch gekennzeichnet, daß ein Gehäuse (100) vorgesehen ist, welches mit mindestens einem Eingangskanal (101) für die Zuleitung des Wärmeträgers von einer Wärmequelle (A) und mit mehreren Ausgangskanälen (105, 107) für die Vorlaufleitungen zu den Verbrauchern an Wärme mit unterschiedlichen Temperaturniveaus ausgebildet ist, wobei zwischen dem Eingangskanal (101) und den Ausgangskanälen (105, 107) mindestens ein steuerbarer Verteiler (110, 120) angeordnet ist, durch welchen einer der Ausgangskanäle (105, 107) auswählbar ist, wobei der steuerbare Verteiler (110, 120) eine Scheibe (112) enthält, welche mit einer Bohrung (113) ausgebildet ist und welche mittels eines Stellmotors (116) verdrehbar ist, wodurch einer der Ausgangskanäle (105, 107) auswählbar ist (Fig. 2, Fig. 3).

11. Verteilereinrichtung für eine Anlage nach einem der Patentansprüche 1 und 4 bis 9, dadurch gekennzeichnet, daß ein Gehäuse (100) vorgesehen ist, welches mit einer Mehrzahl von Eingangskanälen (107) für den Anschluß der Rücklaufleitungen von den Verbrauchern an Wärmeenergie und mit einem Ausgangskanal (160a) für die Zuleitung des Trägermediums zu einer Wärmepumpe (8) ausgebildet ist, wobei zwischen den Eingangskanälen (107) und dem Ausgangskanal (160a) mindestens ein steuerbarer Sammler (160) vorgesehen ist, durch welchen einer der Eingangskanäle (107) auswählbar ist, aus welchem das Trägermedium der Wärmepumpe (8) zugeführt wird, wobei der steuerbare Sammler eine Scheibe (162) enthält, welche mit einer Bohrung (163) ausgebildet ist und welche mittels eines Stellmotors (166) verdrehbar ist, wodurch einer der Eingangskanäle (107) auswählbar ist.

12. Vorrichtung zur Steuerung der Versorgung von Verbrauchern an Wärme mittels eines erwärmten Trägermediums, wobei ein Gehäuse (100) vorgesehen ist, welches mit Anschlüssen (101, 102) für die Zuleitung von erwärmtem Trägermedium von mindestens einer Wärmequelle (A, B, 8) und für die Leitung des Trägermediums zu Verbrauchern an Wärmeenergie ausgebildet ist, wobei sich zwischen den Anschlüssen für die Zuleitung und die Ableitung des Trägermediums mindestens eine steuerbare Verteilereinrichtung (110, 120) befindet, durch welche ein Kanal (104, 106) auswählbar ist, durch welchen hindurch einem von einer Mehrzahl von Verbrauchern erwärmtes Trägermedium zuführbar ist, wobei die mindestens eine steuerbare Verteilereinrichtung (110, 120) eine Scheibe (112) enthält, welche mittels eines Stellmotors (116) verdrehbar ist und welche mit einer Bohrung (113) ausgebildet ist, wobei durch Verdrehung der Scheibe (112) einer der Kanäle (104, 106) auswählbar ist, über welchen mindestens einem der Verbraucher erwärmtes Trägermedium zuführbar ist.

13. Vorrichtung nach Patentanspruch 12, dadurch gekennzeichnet, daß im Gehäuse (100) auch mindestens eine steuerbare Sammlereinrichtung (160) vorgesehen ist, an deren Ausgang eine Wärmepumpe (8) anschließbar ist.

14. Vorrichtung nach einem der Patentansprüche 12 und 13, dadurch gekennzeichnet, daß das Gehäuse vier steuerbare Verteilereinrichtungen (110, 120, 130, 140) und zwei steuerbare Sammlereinrichtungen (150, 160) enthält, welche mittels Kanälen (104, 106, 122, 124) und mittels Anschlußbohrungen (103, 105, 107, 123, 125) zur Verbindung mit Wärmequellen (A, B, 8) sowie mit Verbrauchern an Wärmeenergie und an Kälteenergie miteinander verbunden sind, wobei durch die Verteilereinrichtungen (110, 120, 130, 140) und die Sammlereinrichtungen (150, 160) die Speisung der Verbraucher an Wärmeenergie und an Kälteenergie mit einem Trägermedium steuerbar ist.

## Claims

1. An installation for supplying systems consuming heat with a transfer medium heated in at least one heat source, the connecting lines from the heat source (A, B, 8), of which there is at least one, extending to a device to which a plurality of consuming systems are connected, characterised in that the outlet line of the heat source (A, B, 8), of which there is at least one, is connected to the inlet of at least one associated controllable distributor device (1, 2), which comprises a plurality of outlets to which the feed lines (71 to 79') to systems consuming heat at various temperature levels are connected, wherein the controllable distributor device (1, 2) may select one of the consuming systems for supply of the heated transfer medium and in that systems consuming heat at different temperature levels are corrected in series, whereby transfer medium flows through them in succession (Fig. 1).

2. An installation according to claim 1, characterised in that at least one heat source takes the form, in a manner known per se, of a solar panel (A, B), an environmental energy collector and/or an underground energy store or the like, wherein it is preferred that two solar panels (A, B) are oriented in different directions towards the sky.

3. An installation according to either one of claims 1 and 2, characterised in that at least one heat source takes the form of a heat pump (8).

4. An installation according to claim 3, characterised in that the return lines (75a to 79a) from low temperature consuming systems are connected to the inlets (61 to 65) of a controllable collecting device (6), which has a single outlet line (60) connected to the inlet of a heat pump (8), wherein the collecting device (6) allows selection of the consuming system whose return line is to be connected to the heat pump (8), wherein the return lines (75a to 79a) from systems consuming heat at low temperature levels may preferably be connected via the controllable collecting device (6) to the evaporator (81) of the heat pump (8).

5. An installation according to claim 4, characterised in that the return lines (71, to 75) from the systems consuming heat at high temperature levels may be connected to the condenser (84) of the heat pump (8) via a further controllable collecting device (5).

6. An installation according to any one of claims 3 to 5, characterised in that the outlet of the heat pump (8) is connected to the inlet of a further controllable distributor device (3), which has a plurality of outlets (31 to 34) which lead to high temperature consuming systems, wherein this further distributor device (3) allows one of the consuming systems to be selected for supply of the transfer medium by the heat pump (8).

7. An installation according to any one of claims 3 to 6, having a heat pump (8) which comprises an evaporator (81), a compressor (83) and a condenser (84), characterised in that a cold-consuming system (9) is connected to the evaporator (81).

8. An installation according to claim 7, characterised in that the return line (90) from the cold-consuming system (9) is connected to the inlet of a further controllable distributor device (4), to the outlets (41 to 44) of which there are connected low temperature consuming systems, wherein this further distributor device (4) allows one of the consuming systems to be selected for supply of the transfer medium heated in the cold-consuming system (9).

9. An installation according to claim 8, characterised in that the return line from the cold-consuming system (9) is connected to a mixing valve (85), to which there are connected lines leading to the thermal collectors (A, B) and the evaporator (81) of the heat pump (8).

10. A distributor device for an installation according to any one of claims 1 to 9, characterised in that a housing (100) is provided which comprises at least one inlet duct (101) for the heat transfer medium feed coming from a heat source (A) and a plurality of outlet ducts (105, 107) for the feed lines extending to the systems consuming heat at different temperature levels, wherein at least one controllable distributor (110, 120) is arranged between the inlet duct (101) and the outlet ducts (105, 107), by means of which distributor (110, 120) one of the outlet ducts (105, 107) may be selected, wherein the controllable distributor (110, 120) contains a disk (112) which exhibits a hole (113) and which may be rotated by means of a servo motor (116), whereby one of the outlet ducts (105, 107) may be selected (Fig. 2, Fig. 3).

11. A distributor device for an installation according to any one of claims 1 and 4 to 9, characterised in that a housing (100) is provided which comprises a plurality of inlet ducts (107) for connection of the return lines from the heat consuming systems and an outlet duct (160a) for feeding the transfer medium to a heat pump (8), wherein at least one controllable collecting device (160) is provided between the inlet ducts (107) and the outlet duct (160a), by means of which collecting device (160) one of the inlet ducts (107) may be selected from which the transfer medium is fed to the heat pump (8), wherein the controllable collecting device contains a disk (162) which exhibits a hole (163) and which may be rotated by means of a servo motor (166), whereby one of the inlet ducts (107) may be selected.

12. A device for controlling the supply of heat to consuming systems by means of a heated transfer medium, wherein a housing (100) is provided which comprises connections (101, 102) for supplying heated transfer medium from at least one heat source (A, B, 8) and conveying the transfer medium to heat consuming systems, wherein at least one controllable distributor device (110, 120) is located between the connections for supplying and drawing off the transfer medium, by means of which distributor device (110, 120) a duct (104, 106) may be selected through which a heated transfer medium may be fed to one of a plurality of consuming systems, wherein the controllable distributor device (110, 120), of which there is at least one, contains a disk (112), which may be rotated by means of a servo motor (116) and which exhibits a hole (113), wherein, by rotation of the disk (112), one of the ducts (104, 106) may be selected via which heated transfer medium may be fed to at least one of the consuming systems.

13. A device according to claim 12, characterised in that at least one controllable collecting device (160) is also provided in the housing (100), to the outlet of which a heat pump (8) may be connected.

14. A device according to either one of claims 12 and 13, characterised in that the housing contains four controllable distributor devices (110, 120, 130, 140) and two controllable collecting devices (150, 160), which are connected together by means of ducts (104, 106, 122, 124) and by means of connecting bores (103, 105, 107, 123, 125) for connection with heat sources (A, B, 8) and with systems consuming heat and cold, wherein supply of the heat- and cold-consuming systems with a transfer medium may be controlled by the distributor devices (110, 120, 130, 140) and the collecting devices (150, 160).

## Revendications

1. Installation pour l'alimentation de récepteurs d'énergie thermique avec un agent caloporteur chauffé dans au moins une source thermique, les conduites de branchement de la ou des source(s) thermique(s) (A, B, 8) menant à un dispositif auquel est raccordée une pluralité de récepteurs, caractérisée en ce que la conduite de sortie de la ou des source (s) thermique(s) (A, B, 8) est reliée à l'entrée d'au moins un dispositif de distribution (1, 2) commandable, associé à celle-ci, lequel dispositif comporte une pluralité de sorties auxquelles sont raccordées les conduites aller (71 à 79') menant à des récepteurs d'énergie thermique avec niveau de température différent, le dispositif de distribution (1, 2) commandable permettant de sélectionner l'un des récepteurs auquel l'agent caloporteur chauffé doit être acheminé et en ce que les récepteurs d'énergie thermique de niveau de température différent sont montés en série, de sorte qu'ils sont traversés successivement par l'agent caloporteur (fig. 1).

2. Installation selon la revendication 1, caractérisée en ce qu'au moins une source de chaleur est constituée, de manière connue en soi, par un collecteur solaire (A, B), par un collecteur ambiant et/ou par un accumulateur de terre ou similaire, deux collecteurs solaires (A, B), orientés vers des directions différentes du ciel étant prévus de préférence.

3. Installation selon l'une des revendications 1 ou 2, caractérisée en ce qu'au moins une source thermique est constituée par une pompe à chaleur (8).

4. Installation selon la revendication 3, caractérisée en ce que les conduites de retour (75a à 79a) de récepteurs à faible niveau de température, sont reliées aux entrées (61 à 65) d'un dispositif collecteur (6) commandable, qui présente une seule conduite de sortie (60), laquelle est reliée à l'entrée d'une pompe à chaleur (8), le dispositif collecteur (6) permettant de sélectionner le récepteur dont le retour est relié à la pompe à chaleur (8), les conduites de retour (75a à 79a) des récepteurs d'énergie thermique de faible niveau de température pouvant être raccordées de préférence à l'évaporateur (81) de la pompe à chaleur (8), par le dispositif collecteur (6) commandable.

5. Installation selon la revendication 4, caractérisée en ce que les conduites de retour (71 à 75) des récepteurs d'énergie thermique de niveau de température élevé peuvent être raccordées au condensateur (84) de la pompe à chaleur (8), par un dispositif collecteur (5) commandable supplémentaire.

6. Installation selon l'une des revendications 3 à 5, caractérisée en ce que la sortie de la pompe à chaleur (8) est reliée à l'entrée d'un dispositif de distribution (3) commandable supplémentaire, qui présente une pluralité de sorties (31 à 34), lesquelles mènent à des récepteurs de niveau de température élevé, ce dispositif de distribution (3) supplémentaire permettant de sélectionner l'un des récepteurs auquel la pompe à chaleur (8) envoie l'agent caloporteur.

7. Installation selon l'une des revendications 3 à 6, comportant une pompe à chaleur (8), laquelle présente un évaporateur (81), un compresseur (83) et un condensateur (84), caractérisée en ce qu'un récepteur (9) d'énergie frigorifique est relié à l'évaporateur (81).

8. Installation selon la revendication 7, caractérisée en ce que la conduite de retour (90) du récepteur (9) d'énergie frigorifique est reliée à l'entrée d'un dispositif de distribution (4) commandable supplémentaire, aux sorties (41 à 44) duquel sont raccordés des récepteurs de faible niveau de température, ce dispositif de distribution (4) supplémentaire permettant de sélectionner l'un des récepteurs auquel est envoyé l'agent caloporteur chauffé dans le récepteur (9) d'énergie frigorifique (9).

9. Installation selon la revendication 8, caractérisée en ce que la conduite de retour pour le récepteur (9) d'énergie frigorifique est raccordée à une vanne de mélange (85), à laquelle sont raccordées des conduites menant aux collecteurs de chaleur (A, B) et à l'évaporateur (81) de la pompe à chaleur (8).

10. Dispositif de distribution pour une installation selon l'une des revendications 1 à 9, caractérisé en ce qu'il est prévu un boîtier (100) qui comporte au moins un canal d'entrée (101) pour la conduite d'arrivée de l'agent caloporteur à partir d'une source thermique (A) ainsi que plusieurs canaux de sortie (105, 107) pour les conduites aller vers les récepteurs de chaleur à niveau de température différent, un distributeur (110, 120) commandable au moins étant prévu entre le canal d'entrée (101) et les canaux de sortie (105, 107), au moyen duquel l'un des canaux de sortie (105, 107) peut être sélectionné, le distributeur (110, 120) commandable contenant un disque (112) qui présente un perçage (113) et qui peut tourner au moyen d'un servomoteur (116), au moyen duquel peut être sélectionné l'un des canaux de sortie (105, 107)) (fig. 2, fig. 3).

11. Dispositif de distribution pour une installation selon l'une des revendications 1 et 4 à 9, caractérisé en ce qu'il est prévu un boîtier (100) qui présente une pluralité de canaux d'entrée (107) pour le branchement des conduites de retour des récepteurs d'énergie thermique ainsi qu'un canal de sortie (160a) pour la conduite d'arrivée de l'agent caloporteur vers une pompe à chaleur (8), entre les canaux d'entrée (107) et le canal de sortie (160a) étant prévu au moins un collecteur (160) commandable, permettant de sélectionner l'un des canaux d'entrée (107), à partir duquel l'agent caloporteur est acheminé vers la pompe à chaleur (8), le collecteur commandable contenant un disque (162), qui présente un perçage (163) et qui peut tourner au moyen d'un servomoteur (166), ce qui fait que l'un des canaux d'entrée (107) peut être sélectionné.

12. Dispositif pour la commande de l'alimentation de récepteurs de chaleur au moyen d'un agent caloporteur chauffé dans lequel est prévu un boîtier (100), qui présente des raccords (101, 102) pour la conduite d'arrivée de l'agent caloporteur chauffé depuis au moins une source thermique (A, B, 8) et pour la conduite de l'agent caloporteur vers des récepteurs d'énergie thermique, entre les raccords pour la conduite d'arrivée et la conduite de départ de l'agent caloporteur se trouvant au moins un dispositif de distribution (110, 120) commandable, permettant de sélectionner un canal (104, 106) à travers lequel l'agent caloporteur chauffé peut être acheminé vers l'un de plusieurs récepteurs, le ou les dispositif(s) de distribution (110, 120) commandable(s) contenant un disque (112), qui peut tourner au moyen d'un servomoteur (116) et qui présente un perçage (113), la rotation du disque 112) permettant de sélectionner l'un des canaux (104, 106) par lequel l'agent caloporteur chauffé peut être acheminé vers au moins l'un des récepteurs.

13. Dispositif selon la revendication 12, caractérisé en ce que dans le boîtier (100) est prévu aussi au moins un dispositif collecteur (160) commandable, à la sortie duquel peut être raccordée une pompe à chaleur (8).

14. Dispositif selon l'une des revendications 12 et 13, caractérisé en ce que le boîtier contient quatre dispositifs de distribution (110, 120, 130, 140) commandables et deux dispositifs collecteurs (150, 160) commandables, qui sont reliés entre eux au moyen de canaux (104, 106, 122, 124) et au moyen de perçages de raccord (103, 105, 107, 123, 125), en vue de la liaison avec des sources thermiques (A, B, 8) ainsi qu'avec des récepteurs d'énergie thermique et d'énergie frigorifique, les dispositifs de distribution (110, 120, 130, 140) et les dispositifs collecteurs (150, 160) permettant de commander l'alimentation des récepteurs d'énergie thermique et d'énergie frigorifique avec un agent caloporteur.
